# EUROPEAN PATENT APPLICATION

(11) **EP 2 469 934 A1**
(43) Date of publication of application: **27.06.2012**
(21) Application number: 10306506.6
(22) Date of filing: 23.12.2010
(51) Int. Cl.: H04W 48/18

(54) **Support of user services in a mobile communication system including 3G and LTE networks**

(71) Applicant: Alcatel Lucent, 75007 Paris (FR)
(72) Inventor: Orlandi, Barbara, 91620, NOZAY (FR); Mauger, Christophe, 91620, NOZAY (FR); Melia, Telemaco, 91620, NOZAY (FR)
(74) Representative: El Manouni, Josiane

(57) **Abstract**

In one aspect, there is provided a method for the support of user services in a mobile communication system including 3G network and LTE network, said user services including circuit services capable of being supported via 3G network or via LTE network, said method comprising, in an embodiment:
- under both LTE and 3G coverage, supporting circuit services via 3G network.

## Description

The present invention generally relates to mobile communication systems.

Detailed descriptions of mobile communication systems can be found in the litterature, such as in particular in Technical Specifications published by standardisation bodies such as for example 3GPP (3^{rd} Generation Partnership Project).

Examples of systems, such as for example 3GPP systems, include 2G (2^{nd} Generation), 3G (3^{rd} Generation), and LTE (Long Term Evolution) systems.

Examples of user services supported in such systems include circuit services (such as for example voice services) and packet services (such as for example data services).

There is a need to improve the way user services are supported in such systems, in particular taking into account technology evolutions, such as for example evolutions from 3G to LTE.

Embodiments of the present invention in particular address such needs.

These and other objects are achieved, in one aspect, by a method for the support of user services in a mobile communication system including 3G network and LTE network, said user services including circuit services capable of being supported via 3G network or via LTE network, said method comprising, in an embodiment:
- under both LTE and 3G coverage, supporting circuit services via 3G network.

These and other objects are achieved, in other aspects, by entities for the support of user services in a mobile communication system including 3G network and LTE network. Such entities may include entities such as User Equipment, and network entities (such as LMA, HSS, Interworking Function, ANDSF...) ...etc.

Some embodiments of apparatus and/or methods in accordance with embodiments of the present invention are now described, by way of example only, and with reference to the accompanying drawings, in which:
- figure 1 is a simplified view of mobile comunication system including 3G and LTE networks, in an embodiment,
- figure 2 is a simplified view of 3G and LTE networks in a system such as illustrated in figure 1, in a first embodiment,
- figure 3 is a simplified view of 3G and LTE networks in a system such as illustrated in figure 1, in a second embodiment,
- figure 4 is a simplified view of 3G and LTE networks in a system such as illustrated in figure 1, in a third embodiment,
- figure 5 illustrates ANDSF MO, in an embodiment,
- figure 6 illustrates ANDSF extension, in an embodiment,
- figure 7 illustrates a procedure for attachment to a 3G network, in an embodiment,
- figure 8 illustrates a procedure for activation of a PDP context in a 3G network, in a first embodiment,
- figure 9 illustrates a procedure for activation of a PDP context in a 3G network, in a second embodiment,
- figure 10 illustrates a procedure for attachment to an LTE network, in a first embodiment,
- figure 11 illustrates a procedure for attachment to an LTE network, in a second embodiment,
- figure 12 illustrates handover from LTE network to 3G network, by reference to a procedure for handover from 3GPP access to non-3GPP access, in an embodiment.

To be introduced in a landscape already covered by 3G/2G, LTE will have to be able to interwork with existing deployed networks. Compared to evolutions like 2G to 3G, introducing LTE adds that extra complexity that not only does the RAN technology change but also the core network and the whole CS voice network has to be replaced with IMS and VoIP.

The 3GPP has defined procedures for handover between LTE and 3G as well as the CS fallback solution and the SR-VCC.

All those solutions require major investments in 3G and LTE networks. In addition the drawback of the CS fallback is that the data rates of a data connection get reduced to those of the 3G network. The drawback of SR-VCC is that it is a very complex procedure expensive to implement successfully and the handover performances may be poor due to two switching points (in the radio and in the core).

To avoid such drawbacks, in an embodiment, it is proposed to continue supporting voice calls on 3G CS while sending all data connections on LTE whenever available (even during voice calls) and of course support data session continuity between LTE and 3G when losing LTE coverage.

In an embodiment, there is provided a simplification allowing easy LTE interworking with 3G networks with no impact on existing 3G networks:
- use at the same time 3G for CS voice and LTE for data services (no VoIP)
- migrate seamlessly data flows to 3G when loosing LTE coverage.

This can be achieved by considering the LTE network as independent from the 3G network and connect the UE at the same time to both access networks.

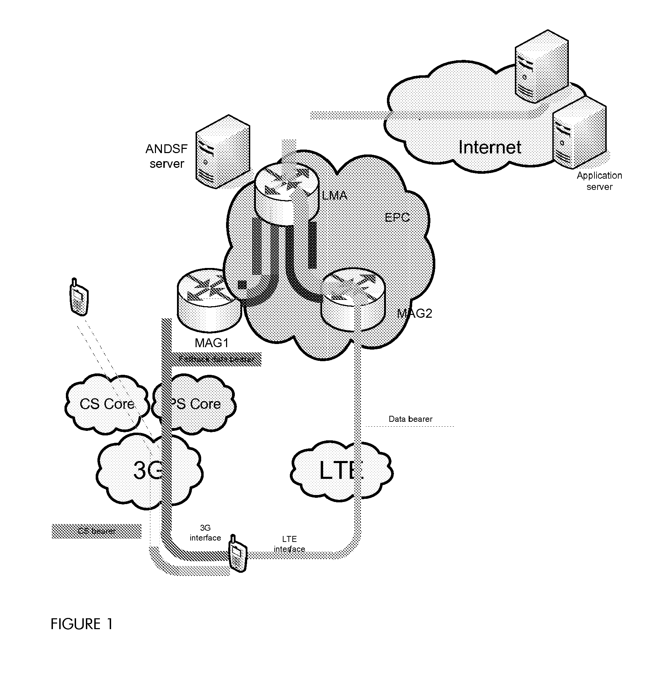

In an embodiment, as illustrated in a simplified way in FIGURE 1:
- a dual-radio UE is connected to both networks when both are available (and only to 3G when lacking LTE coverage)
- voice calls and SMS are provided using the 3G network (VoCS)
- mechanisms defined for 3GPP/non-3GPP interworking are re-used, plus some necessary extensions
- the ANDSF model is extended to allow the network to notify the UE that this specific mode of operation is available
- further extensions to the ANDSF allow to indicate to the UE when to turn on/off its LTE radio so as to ensure battery savings
- further extensions allow the operator to provide a preference policy between use of LTE, 3G and any other non-3GPP RAT
- further extensions allow the operator to provide a per flow preference (the operator might wish to still retain some flows over 3G)
- IP Flow mobility (IFOM)-based solution may be used for migrating seamlessly data flows from/to LTE and 3G. In case of network-based IFOM, such solution can use PMIP but may be adapted to GTP-based S5. Such solution may include the ability for the mobile device to send data packets of a given IP flow on the same physical interface used for receiving that flow.

The impacts of such solution (such as illustrated for example in figure 1) on current standards technical specifications are limited and the solution makes a lot of sense in the current deployment landscape. Furthermore it could be seen as a temporary step to a smooth evolution path for LTE deployment.

Such solution is very flexible and allows for many deployment scenarios. Implementation options and hence possible combinations between the various choices are numerous. Chosen options will depend on vendor's implementation and operator's choices.

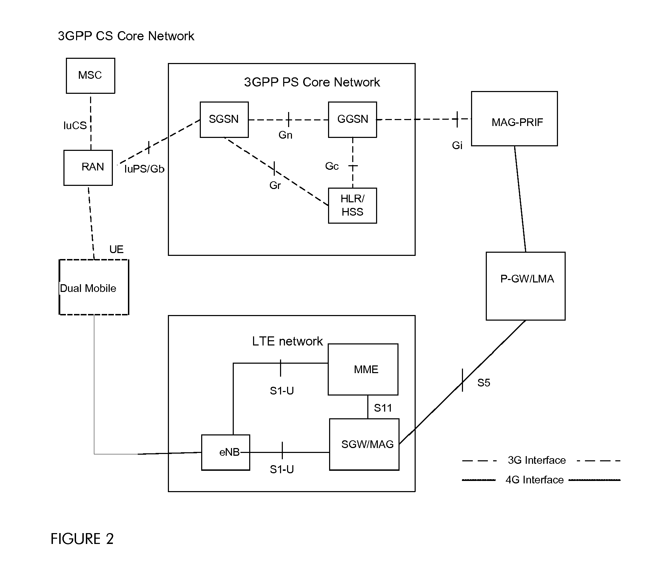

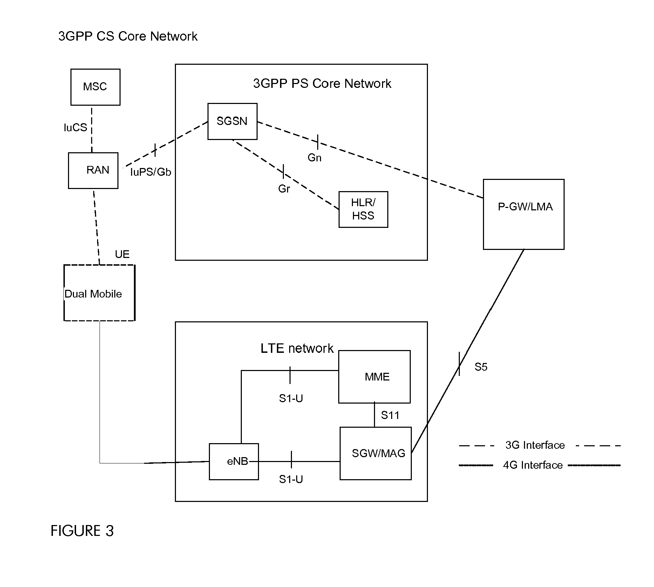

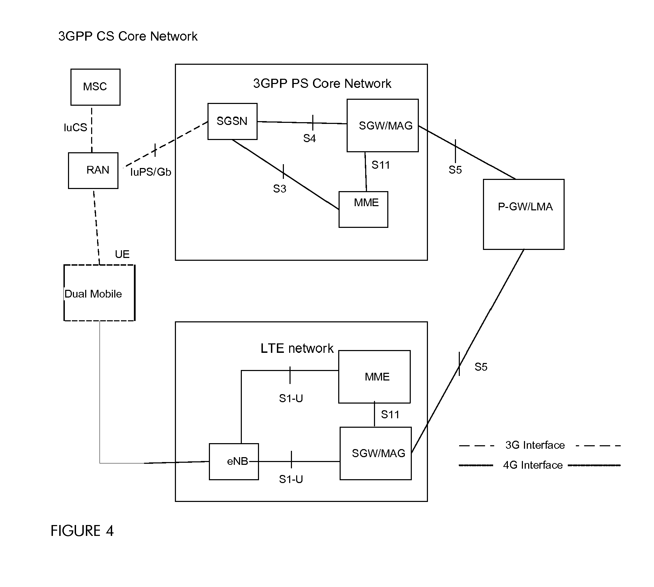

At least four embodiments could be foreseen:
- Embodiment 1: fully independent 3G (Pre-Release 8) and LTE networks. Embodiment 1 is illustrated in FIGURE 2.
- Embodiment 2: Pre-Release 8 3G and LTE networks, the 3G is connected to the EPC. Embodiment 2 is illustrated in FIGURE 3.
- Embodiment 3: Release 8 and onwards 3G and LTE networks, the 3G is connected to the EPC. Embodiment 3 is illustrated in FIGURE 4.
- Embodiment 4: similar to embodiment 1 but the solution is provided as an overlay to both networks, meaning that a Home Agent is added behind the P-GW, the IP address allocation is done through that HA and regular DHCP procedures on the device.

3G coverage may be assumed to be always available (or 3G is assumed to provide basic coverage), LTE coverage may be assumed to be available only in certain spots.

### Features common to all embodiments

PLMN/cell selection mechanisms could be tuned so that the UE always chooses 3G to attach.

Paging and location of the mobile can be based on the 3G network.

Once it has performed cell selection, the mobile establishes a 3G data connection to retrieve policies from its H-ANDSF server. The response to the query may indicate that a simultaneous 3G/LTE mode of operation is supported/preferred by the network and access discovery information is provided to indicate the areas where LTE coverage is to be expected by the mobile.

When reaching an LTE coverage area, the mobile uses its second radio interface to attach to the LTE network while still keeping its 3G data connection up (meaning PDP context activated). Unlike current procedures the LTE attach doesn't trigger a detach from the 3G perspective: the 3G network is fully unaware of the existence of the LTE network.

Voice calls and SMS will be handled by the 3G network. Data connections use the LTE network when available.

The attach on LTE (in the form of a Create Session Request to the P-GW in case of GTP-based S5 or a PBU in case of PMIP-based S5) is the trigger for the LMA to move the mobile's IP flows to the LTE access network.

On the detach procedure the connections are migrated back to the 3G interface.

### Embodiment 1 specificities

To avoid any impact to the existing 3G network, a MAG is added on the Gi interface. Thanks to the dedicated APN, a Radius Access Request message for allocating an IP address to the device may be routed to the 3G/LTE Interworking Function.

This first embodiment may be the most likely deployment scenario in the short-term. A more detailed description willl be provided later.

Note that for this embodiment it is also possible to not use a dedicated APN, that option will be described as well.

In its simplest form, this embodiment may impact the device, the HSS and the AN DSF.

In a more optimised form, it would be advantageous to use an LMA supporting network-based IP flow mobility, this allows for a perfectly seamless handover but has also the following further advantage: though an operator would prefer to send all data traffic on LTE there may be in initial deployment some legacy services that would only be accessible via the 3G core and then network-based flow mobility would allow the operator to keep those flows on 3G while sending all the other kind of traffic on LTE.

### Embodiment 2 specificities

The P-GW performs GGSN functionality for the Pre-Release 8 packet core. The MAG functionality for the Pre-Release 8 packet core is co-localized.

### Embodiment 3 specificities

In such a case the 3G MAG functionality is co-located with the S-GW in the same way as the LTE MAG.

### Example of ANDSF MO extension

The ANDSF model could be extended with a node called for instance Intra3GPPMultiAccessConnectivity indicating the coverage areas where LTE cells are expected. Presence of this node would be a trigger for the UE to use the multi-access connectivity feature if supported.

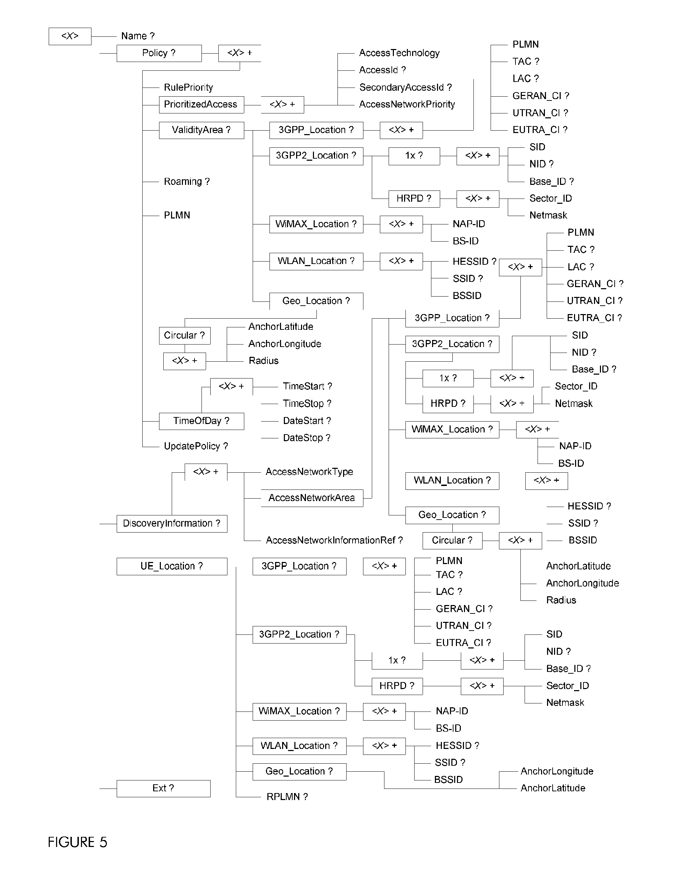

FIGURE 5 shows ANDSF MO as currently specified.

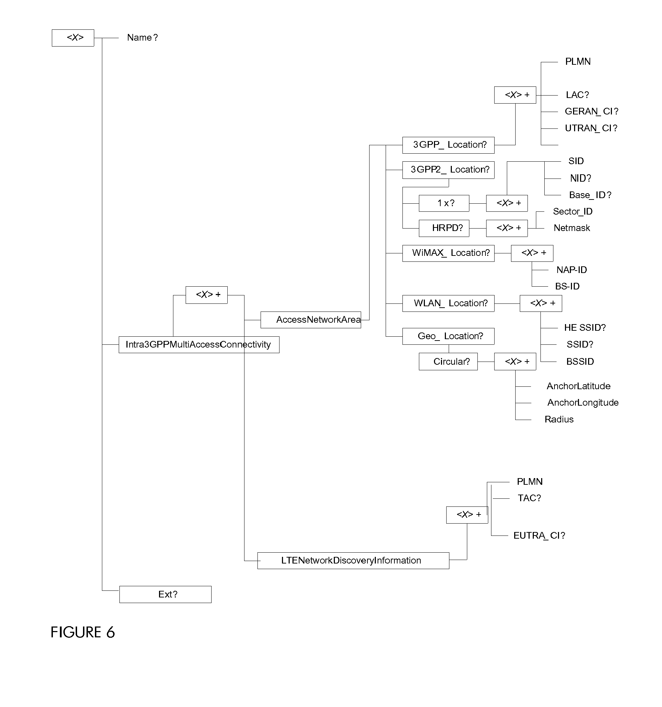

FIGURE 6 shows an example of ANDSF extension. Further extensions may provide a preference policy between use of LTE, 3G and any other non-3GPP RAT or allow the operator to provide a per flow preference (the operator might wish to still retain some flows over 3G).

A summary of possible embodiments and/or options is proposed in the table below.

| Type | Description | Comments | | |
|---|---|---|---|---|
| Architecture | Complete overlay | No impact on any network. Drawback: duplicates HSS, less smooth transition later to full EPS network. | Embodiment 4 | |
| | Pre-Release 8 3G and EPC, Dedicated APN | | 1 | Embodiment |
| | Pre-Release 8 3G and EPC, no dedicated APN | | 1 | Embodiment |
| | Pre-Release 8 3G connected to the EPC | | 2 | Embodiment |
| | Release 8 & onwards 3G connected to EPC | | 3 | Embodiment |
| S5 interface protocol | PMIP | | | |
| | GTP | | | |
| Multi-access connectivity (MAC) with IP Flow Mobility | Use of network-based multi-access connectivity and flow mobility | Pro: smoother handover, allows operator control on which flow go on which RAT(*) Con: a PDP-context needs to be maintained on 3G | (*)It is worth noting that though an operator would prefer to send all data traffic on LTE there may be in initial deployment some legacy services that would only be accessible via the 3G core hence the added-value of multi-access and IP flow granularity. | |
| LTE->3G handover | MAC and trigger based on packet error rate | | | |
| | MAC and use of packet reflector in the LMA | | | |
| | MAC and new flag in detach to trigger move in LMA | Pro: lesser impact in LMA Con: impacts standard LTE signalling | | |
| | No use of MAC | Pro: no impact on LMA, no PDP context used in 3G while on LTE Con: session continuity may experience a small gap | | |

### Embodiment 1 detailed description

The description below refers to the relevant 3GPP specifications and identifies where the messages or parameters use may slightly differ from the current specification.

### Step 1 : 3G attach

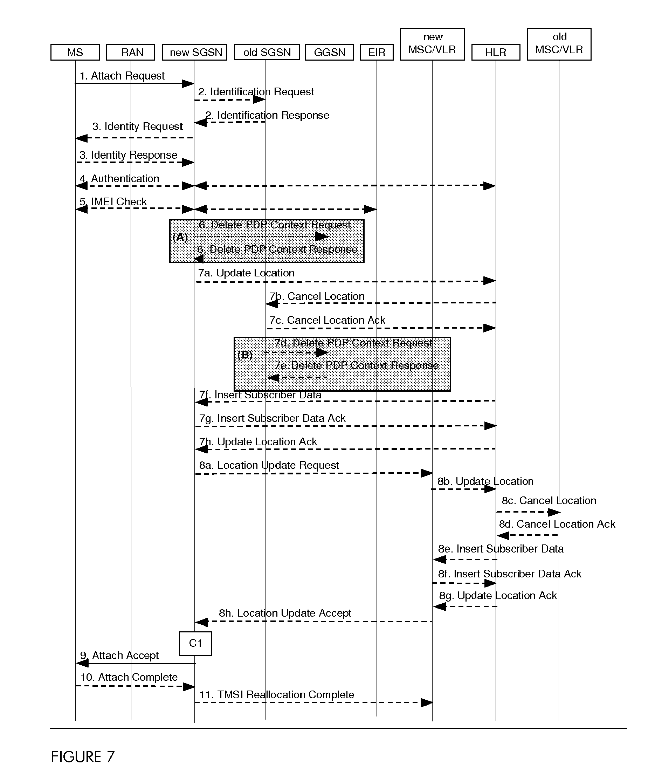

Mobile device is switched on and performs a combined GPRS/IMSI attach procedure as per 3GPP TS 23.060 § 6.5.3. This attach procedure is recalled in FIGURE 7 (copied from this specification). Note: a separate CS and GPRS attach is also feasible.

A change compared to the current specification may be that regardless of the TIN, the MS needs to always use the P-TMSI when on 3G and the GUTI when on LTE and keep track of them independently.

### Step 2 : Activate PDP context

The aim of this step is to gain PDN connectivity with an IP address allocation anchored in the EPC P-GW which performs the role of LMA.

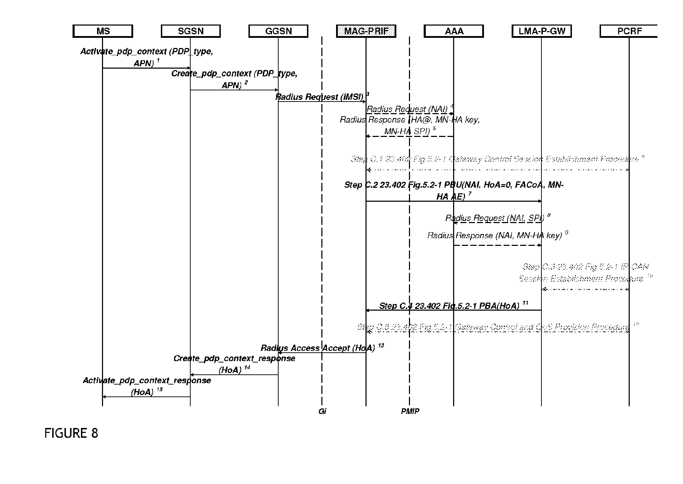

The preferred solution (FIGURE 8) is to use a dedicated APN that allows to route towards a MAG-PRIF (for Pre-Release 8 Interworking Function) that will perform proxy MIP signalling towards the LMA. (Similarly to the PRIF function defined by the WMF to interwork with 3GPP Pre-Release 8 networks.)

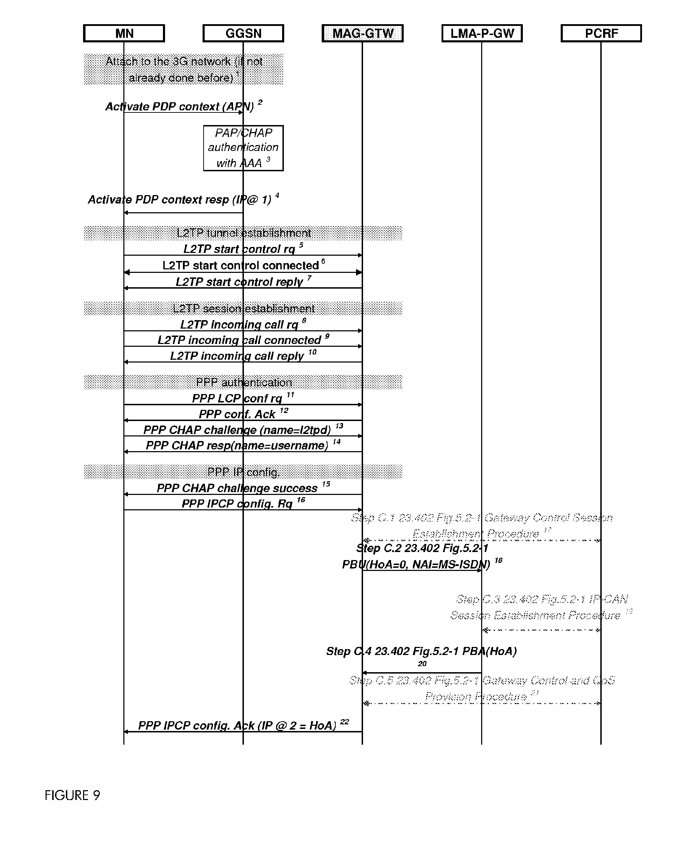

But other options like using an L2TP (FIGURE 9) (or any other kind of tunnnelling: VPN etc...) are also possible.

In the call flows of FIGURES 8 and 9, dashed lines represent optional steps.

Following steps are illustrated in FIGURE 8:
- A message Activate_PDP_Context (PDP type, APN) is sent by the MS to the SGSN. A dedicated APN for 3G/LTE interworking, associated with the MAG-PRIF function is used, and transparent access mode is used.
- A message Create_PDP_Context (PDP type, APN) is sent by the SGSN to the GGSN.
- GGSN sends a Radius Request (IMSI) to MAG-PRIF.
- MAG-PRIF sends a Radius Request (NAI) to AAA Server,
- AAA Server sends a Radius Response (HA@, MN-HA key, MN-HA SPI) to MAG-PRI F,
- Optionaly, Gateway Control Session Establishment Procedure between MAG-PRIF and PCRF,
- A Proxy Binding Update PBU (NAI, HoA=0, FACoA, MN-HA AE) is sent by MAG-PRIF to LMA-P-GW.
- LMA-P-GW sends Radius Request (NAI, SPI) to AAA Server.
- AAA Server sends Radius Response (NAI, MN-HA key) to LMA-P-GW,
- Optionaly, IP-CAN Session Establishement Procedure between LMA-P-GW and PCRF,
- A Proxy Binding Accept PBA (HoA) is sent by LMA-P-GW to MAG-PRIF.
- Optionaly, Gateway Control and QoS Provision Procedure between MAG-PRIF and PCRF,
- MAG-PRIF sends a Radius Access Accept (HoA) to the GGSN.
- A message Create_PDP_Context_response (HoA) is sent by GGSN to SGSN.
- A message Activate_PDP_Context_Response (HoA) is sent by the SGSN to the MS.

From the point of view of the P-GW the procedure can be considered the same as defined in 23.402 Fig. 5.2-1 or as in 23.402 Fig. 6.2.1-1 where one could see the 3G network "hidden" behind the MAG-PRIF as a trusted non-3GPP access and have an S2a interface between MAG-PRIF and P-GW.

The procedure on Pre-Release 8 packet core (SGSN, GGSN) is also unchanged.

### Step 3 : Contact ANDSF

The MS contacts the ANDSF and gets Inter-system Mobility Policies, Inter-system Routing Policies, Discovery information with extensions that indicate:
- Where LTE coverage can be found (the location can be defined with both 3G/2G cell Ids and geographical coordinates for better accuracy)
- Optionally what policy the operator has in terms of preferred network or RAT
- Optionally operator routing policy per APN or IP flow (should some flows for instance stay on 3G even though LTE is available)

Such extensions are not specified today in 3GPP as ANDSF role today is limited to providing information on non-3GPP networks.

### Step 4 : UE enters LTE coverage area

If the UE was in idle mode, it stays in idle mode and follows UTRAN idle mode procedures.

If the UE was in a connected state, thanks to the ANDSF information, the UE knows it enters an LTE coverage area and can start its second radio and scan for a suitable LTE cell using standard LTE procedures.

The UE then attaches to the LTE network (and that is triggering the actual 3G to LTE handover for the data plane):

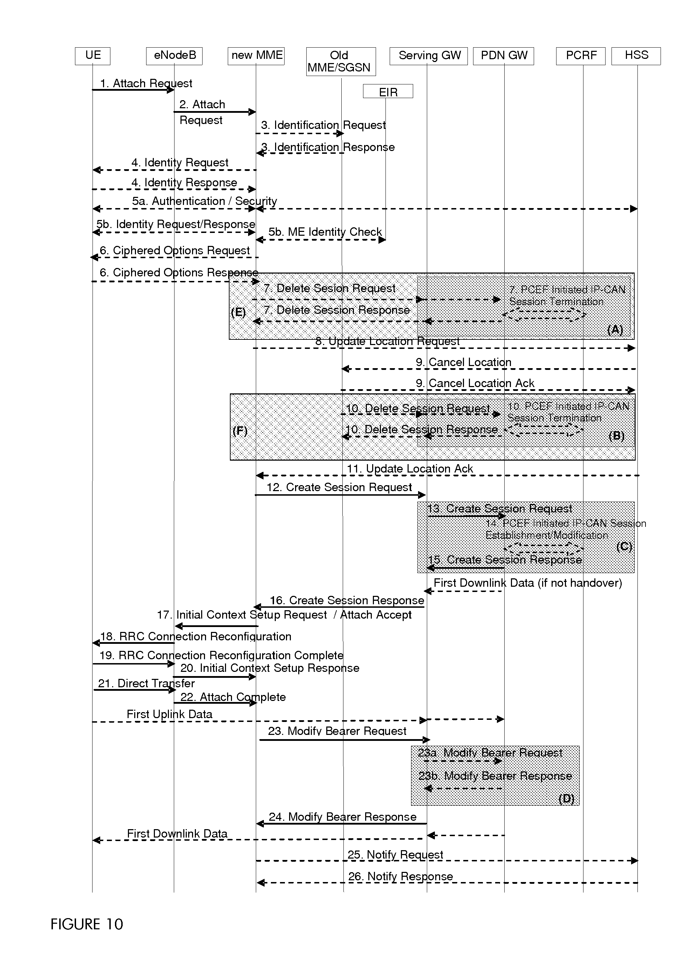

FIGURE 10 (copied from 23.401 Fig. 5.3.2.1-1) describes the GTP case.

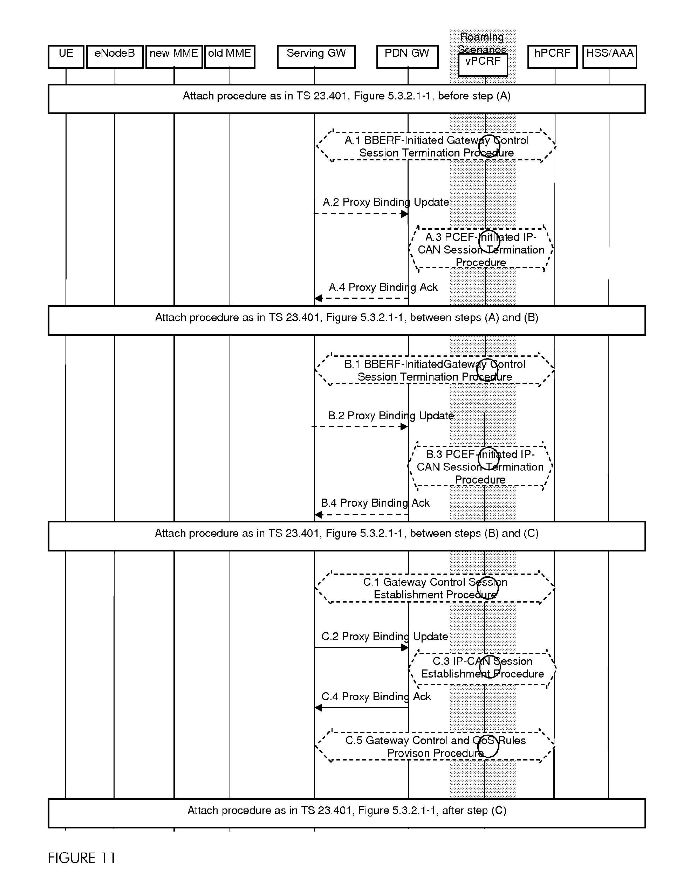

FIGURE 11 (copied from 23.402 Fig. 5.2-1)describes the PMIP case but as it mostly also refers to the 23.401 (GTP) description, only the GTP case (FIGURE 10) will be considered below.

For attaching to the LTE network, following modifications may be required to the attach procedure as currently specified by 3GPP TS 23.401 and illustrated in figure 10:
- Step 1
   - Whereas it is currently specified "The old GUTI may be derived from a P-TMSI and RAI", here the GUTI is not based on a P-TMSI and RAI: the UE stores independently P-TMSI for usage on 3G and GUTI for usage on LTE.
   - Whereas it is currently specified "Request Type is included in the ESM message container and indicates "Handover" when the UE has already an activated PDN GW/HA due to mobility with non-3GPP accesses", here the Request Type needs to indicate "Handover" (as if the UE was coming from a non-3GPP access) to allow session continuity between 3G and LTE.
- Step 2
   - Whereas it is currently specified " If the request si sent to an old SGSN, the old SGSN first verifies the Attach Request message by the P-TMSI signature and then responds with Identification Response (IMSi, MM context)", here a request to an old SGSN would not happen because the 3G and LTE networks know nothing of each other.
- Step 9
   - Whereas it is currently specified "The HSS sends Cancel Location (IMSI, Cancellation Type) to the old MME. The old MME acknowledges with Cancel Location Ack (IMSI) and removes the MM and bearer contexts. If the Update Type indicates Attach and the HSS has the SGSN registration, then the HSS sends Cancel Location (IMSI, Cancellation Type) to the old SGSN. The Cancellation Type indicates the old MME/SGSN to release the old Serving GW resource", here the HSS needs to keep track of the 3G and LTE locations separately. A new location in the LTE network should trigger a cancel location towards the previous MME only and never towards an SGSN even though the device may/will have been connected via 3G in-between LTE connections (when the LTE coverage is not continuous). The same applies to 3G location updates which will not trigger any cancel location in the LTE network.
- Step 18
   - While it is currently specified "When receiving the Attach Accept message the UE shall set its TIN to "GUTI" as no ISR Activated is indicated", here one must keep in mind that there is no need to handle the TIN: when on LTE then always use GUTI, when connecting to the 3G always use P-TMSI.
- Step 23a
   - Whereas it is currently specified "If the Handover Indication is included in step 23, the Serving GW sends a Modify Bearer Request (Handover Indication) message to the PDN GW to prompt the PDN GW to tunnel packets from non 3GPP IP access to 3GPP access system and immediately start routing packets to the Serving GW for the default and any dedicated EPS bearers established.", here the handover would not be from non 3GPP to 3GPP but from 3G to LTE. It is where the handover occurs from an end-user perspective, the established flow goes over LTE without session interruption.
- Note 12
   - Whereas it is currently specified: "For handover from non-3GPP access, the PDN GW initiates resource allocation deactivation procedure in the trusted/untrusted non-3GPP IP access as specified in TS 23.402", here depending on the chosen option for handovers, there may or not be a difference to the 23.401/23.402 specification. Note 12 would correspond to HO option 4 described below. For all the other options that use Multi-Access Connectivity (MAC), the 3G PDP context is maintained. It may be kept alive by the device to avoid a network-initiated release.

| | HO Options | Comments | |
|---|---|---|---|
| LTE->3G handover | MAC and trigger based on packet error rate | | HO option 1 |
| | MAC and use of packet reflector in the LMA | | HO option 2 |
| | MAC and new flag in detach to trigger move in LMA | Pro: lesser impact in LMA Con: impacts standard LTE signalling | HO option 3 |
| | No use of MAC | Pro: no impact on LMA, no PDP context used in 3G while on LTE Con: session continuity may experience a small gap | HO option 4 |

### Step 5 : UE initiates/receives CS voice call on 3G

There is no impact on the procedure, it is run in parallel and independently to the LTE data connection (and to the 3G data connection if it has been maintained).

### Step 6 : UE leaves LTE coverage area

### LTE -> 3G handover option 1

In this option thanks to multi-access connectivity it is not a "real" handover from a radio point of view as both RATs are connected.

As the UE is leaving LTE coverage the increase in packet error rate can be used as trigger for the LMA to move the flows to the 3G. On the UE side either because it also has noticed the loss of coverage or because it has implemented a packet reflector that mirrors LMA decisions, the UE starts to send UL traffic on 3G.

### LTE -> 3G handover option 2

In this option thanks to multi-access connectivity it is not a "real" handover from a radio point of view as both RATs are connected.

As the UE is leaving LTE coverage, it starts to send UL packets on the 3G interface instead of LTE (based for instance on failing LTE signal strength).

In this option the LMA implements a packet reflector, when it starts receiving UL packets on 3G, it mirrors the decision by sending DL packets on 3G as well.

### LTE -> 3G handover option 3

In this option thanks to multi-access connectivity it is not a "real" handover from a radio point of view as both RATs are connected.

As the UE is leaving LTE coverage (based for instance on failing LTE signal strength), it sends a detach message. This detach message needs to be enhanced with a handover indicator flag that would be transmitted up to the P-GW so that the P-GW knows it shouldn't release the 3G connection. This impacts the detach message plus the delete session request messages in GTP case or IP-CAN session messages and PBU in PMIP case.

Note: potential further optimisation for options 1 to 3: if the LTE coverage zone is big enough the UE could momentarily release the 3G PDP context for battery savings and open it again only when it knows that it is nearing the end of the overlap zone. All this can be done thanks to the map provided by the ANDSF.

### LTE -> 3G handover option 4

In this option the UE will setup again a PDP context on 3G when it detects LTE failing signal strength. To avoid a gap in the session, it will use a "make-before-break" approach by establishing the 3G data connection before the failure of the LTE connection.

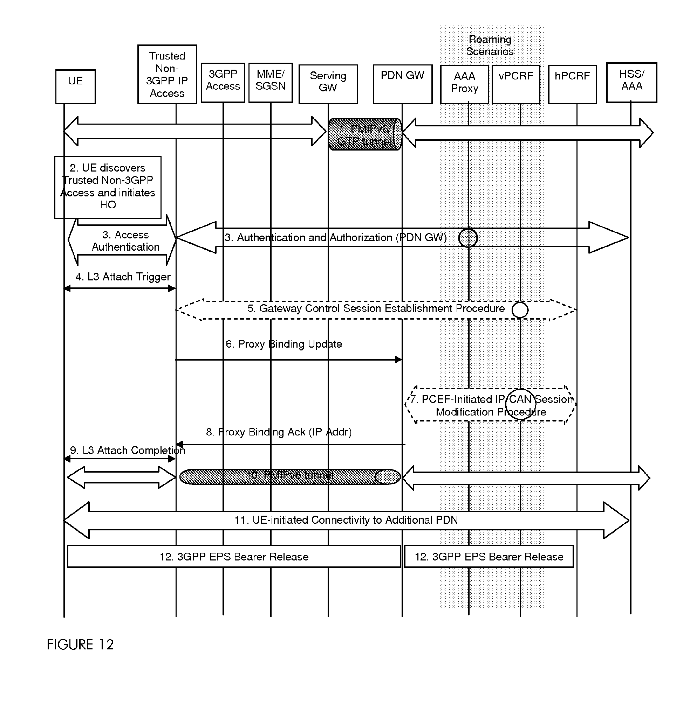

The UE may perform the procedure in FIGURE 8 except that it may need to set the handover indicator in the PCO. The procedure can be described by reference to the procedure for handover from 3GPP Access to Trusted Non-3GPP IP Access with PMIPv6 on S2a and PMIPv6 or GTP on S5 interface as described in FIGURE 12 (copied from 23.402 Figure 8.2.2-1), considering that the Trusted "Non-3GPP" IP access is represented by the MAG-PRIF.

In one aspect, there is provided a method for the support of user services in a mobile communication system including 3G network and LTE network, said user services including circuit services capable of being supported via 3G network or via LTE network, said method comprising, in an embodiment:
- under both LTE and 3G coverage, supporting circuit services via 3G network.

In another aspect (which could be used independently of the above one), there is provided a method for the support of user services in a mobile communication system including 3G network and LTE network, said user services including packet services capable of being supported via 3G network or via LTE network, said method comprising:
- under both LTE and 3G coverage, supporting packet services via LTE network.

In an embodiment, said method comprises:
- providing packet services continuity between LTE network and 3G network when lacking LTE coverage.

In an embodiment, said method comprises:
- tunnelling packet flows through LTE Evolved Packet Core between a PDN Gateway (PGW/LMA) anchoring said packet flows and a Serving Gateway (SGW/MAG) associated with LTE network or a Serving Gateway (SGW/MAG) associated with 3G network.

In an embodiment, said method comprises:
- handing over packet flows from LTE network to 3G network, respectively from 3G network to LTE network, when loosing, respectively recovering, LTE coverage.

In an embodiment, said method comprises:
- providing to a PDN Gateway (PGW/LMA) anchoring packet flows, indication of handover from 3G to LTE when attaching to LTE network.

In an embodiment, said method comprises:
- providing to a PDN Gateway (PGW/LMA) anchoring packet flows, indication of handover from LTE to 3G when detaching from LTE network.

In an embodiment, said method comprises:
- under both LTE and 3G coverage, a User Equipment connecting simultaneously to LTE network and to 3G network for packet services.

In an embodiment, said method comprises:
- moving seamlessly packet flows from LTE network to 3G network when loosing LTE coverage, for a User Equipment simultaneously connected to LTE network and 3G network.

In an embodiment, said method comprises:
- under both LTE and 3G coverage, supporting packet services via LTE or 3G network, according to operator's policies.

In an embodiment, said method comprises:
- an Interworking Function providing interworking between a PDN Gateway (GGSN) in 3G network and a PDN Gateway (PGW/LMA) in LTE network.

In an embodiment, said method comprises:
- providing to User Equipments information as to LTE coverage areas.

In an embodiment, said method comprises:
- providing to User Equipments under both LTE and 3G coverage information as to operator's policies for the routing of packet flows through LTE network or 3G network.

In addition to a method for the support of user services in a mobile communication system including 3G network and LTE network, the present invention also provides different entities comprising means for performing such method, such as User Equipment, and network entities (such as LMA, HSS, Interworking Function, ANDSF Server, ...)...etc.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
- 3GPP: Third Generation Partnership Project
- AAA: Authentication, Authorization and Accounting
- ANDSF: Access Network Discovery and Selection Function
- APN: Access Point Name
- ATT: Access Technology Type
- BCE: Binding Cache Entry
- BS: Base Station
- BSSID: Basic Service Set Identifier
- Cl: Cell identifier
- CoA: Care-of Address
- CS: Circuit Switched
- DDF: Device Description Framework
- DHCP: Dynamic Host Configuration Protocol
- DL: Downlink
- eNB: Evolved Node B
- EPC: Evolved Packet Core
- EPS: Evolved Packet System
- E-UTRA: Evolved-UTRA
- FA: Foreign Agent
- GBA: Generic Bootstrapping Architecture
- GERAN: GSM EDGE Radio Access Network
- GGSN: Gateway GPRS Support Node
- GPRS: General Packet Radio Service
- GPS: Global Positioning System
- GSM: Global System for Mobile communications
- GTP: GPRS Tunneling Protocol
- GTW: Gateway
- GUTI: Globally Unique Temporary Identity
- GW: Gateway
- HA: Home Agent
- H-ANDSF: Home ANDSF
- HI: Handover Indicator
- HLR: Home Location Register
- HNP: Home Network Prefix
- HO: Hand Over
- HoA: Home Address
- H-PLMN: Home PLMN
- HRPD: High Rate Packet Data
- HSDPA: High Speed Downlink Packet Access
- HSS: Home Subscriber Server
- IEEE: Institute of Electrical and Electronics Engineers
- IETF: Internet Engineering Task Force
- IFOM: IP Flow Mobility
- IMS: IP Multimedia Subsystem
- IMSI: International Mobile Subscriber Identity
- IP: Internet Protocol
- IP-CAN: I P-Connectivity Access Network
- ISDN: Integrated Services Digital Network
- ISR: Idle mode Signalling Reduction
- L2TP: Layer 2 Tunneling Protocol
- LAC: Location Area Code
- LMA: Local Mobility Anchor
- LMD: Local Mobility Domain
- LTE: Long term Evolution
- MAC: Multi-Access Connectivity
- MAG: Mobility Access Gateway
- MAG-PRIF: MAG-Pre-Release 8 Interworking Function
- MAPCON: Multi-Access PDN Connectivity
- MCC: Mobile Country Code
- MIP: Mobile IP
- MM: Mobility Management
- MME: Mobile Management Entity
- MN: Mobile Node
- MNC: Mobile Network Code
- MNO: Mobile Network Operator
- MO: Managed Object
- MS: Mobile Station
- MSC: Mobile Switching Centre
- MS-CHAP: Microsoft Challenge Handshake Authentication Protocol
- MS-ISDN: Mobile Subscriber ISDN Number
- NAI: Network Access Identifier
- NAP: Network Access Provider
- OMA-DM: Open Mobile Alliance - Device Management
- PAP/CHAP: PPP Authentication Protocol/ Challenge-Handshake Authentication Protocol
- PBA: Proxy Binding Acknowledgement
- PBU: Proxy Binding Update
- PCO: Protocol Configuration Options
- PDN: Packet Data Network
- PDP: Packet Data Protocol
- P-GW: PDN GTW
- PLMN: Public Land Mobile Network
- PMIP: Proxy Mobile IP
- PPP: Point-to-Point Protocol
- PS: Packet Switched
- P-TMSI: Packet- Temporary Mobile Subscriber Identity
- QoE: Quality of Experience
- QoS: Quality of Service
- Radius: Remote Authentication Dial In User Service
- RAI: Routing Area Identity
- RAN: Radio Access Network
- RAT: Radio Access Technology
- RRQ: Registration request
- RRP: Registration response
- SGSN: Serving GPRS Support Node
- S-GW: Serving Gateway
- SIM: GSM Subscriber Identity Module
- SMS: Short Message Service
- SPI: Security Parameter Index
- SPR: Subscription Profile Repository
- SR-VCC: Single Radio - Voice Call Continuity
- SSID: Service Set Identifier
- TAC: Tracking Area Code
- TIN: Temporary Identity used in Next update
- UE: User Equipment
- UL: Uplink
- UMTS: Universal Mobile Telecommunication System
- USIM: Universal Subscriber Identity Module
- UTRA: Universal Terrestrial Radio Access
- UTRAN: Universal Terrestrial Radio Access Network
- VoCS: Voice over CS
- VoIP: Voice over IP
- V-PLMN: Visited PLMN
- VPN: Virtual Private Network
- WLAN: Wireless Local Area Network
- XML: eXtensible Markup Language

## Claims

1. A method for the support of user services in a mobile communication system including 3G network and LTE network, said user services including circuit services capable of being supported via 3G network or via LTE network, said method comprising:
- under both LTE and 3G coverage, supporting circuit services via 3G network.

2. A method according to claim 1, said user services including packet services capable of being supported via 3G network or via LTE network, said method comprising:
- under both LTE and 3G coverage, supporting packet services via LTE network.

3. A method according to claim 1 or 2, comprising:
- providing packet services continuity between LTE network and 3G network when lacking LTE coverage.

4. A method according to any of claims 1 to 3, comprising:
- tunnelling packet flows through LTE Evolved Packet Core between a PDN Gateway (PGW/LMA) anchoring said packet flows and a Serving Gateway (SGW/MAG) associated with LTE network or a Serving Gateway (SGW/MAG) associated with 3G network.

5. A method according to any of claims 1 to 4, comprising:
- handing over packet flows from LTE network to 3G network, respectively from 3G network to LTE network, when loosing, respectively recovering, LTE coverage.

6. A method according to any of claims 1 to 5, comprising:
- providing to a PDN Gateway (PGW/LMA) anchoring packet flows, indication of handover from 3G to LTE when attaching to LTE network.

7. A method according to any of claims 1 to 6, comprising:
- providing to a PDN Gateway (PGW/LMA) anchoring packet flows, indication of handover from LTE to 3G when detaching from LTE network.

8. A method according to any of claims 1 to 7, comprising:
- under both LTE and 3G coverage, a User Equipment connecting simultaneously to LTE network and to 3G network for packet services.

9. A method according to any of claims 1 to 8, comprising:
- moving seamlessly packet flows from LTE network to 3G network when loosing LTE coverage, for a User Equipment simultaneously connected to LTE network and 3G network.

10. A method according to any of claims 1 to 9, comprising:
- under both LTE and 3G coverage, supporting packet services via LTE or 3G network, according to operator's policies.

11. A method according to any of claims 1 to 10, comprising:
- an Interworking Function providing interworking between a PDN Gateway (GGSN) in 3G network and a PDN Gateway (PGW/LMA) in LTE network.

12. A method according to any of claims 1 to 11, comprising:
- providing to User Equipments information as to LTE coverage areas.

13. A method according to any of claims 1 to 12, comprising:
- providing to User Equipments under both LTE and 3G coverage information as to operator's policies for the routing of packet flows through LTE network or 3G network.

14. A network entity, comprising means for performing a method according to any of claims 1 to 13.

15. A User Equipment, comprising means for performing a method according to any of claims 1 to 13.
